# EUROPÄISCHE PATENTSCHRIFT

(11) **EP 4 140 793 B1**
(45) Veröffentlichungstag und Bekanntmachung des Hinweises auf die Patenterteilung: **15.01.2025**
(21) Anmeldenummer: 22191960.8
(22) Anmeldetag: 24.08.2022
(51) Int. Cl.: B60K 15/05

(54) **KLAPPENEINRICHTUNG FÜR EIN FAHRZEUG**
FLAP DEVICE FOR A VEHICLE
DISPOSITIF TRAPPE POUR UN VÉHICULE

(30) Priorität: 27.08.2021 DE 102021122272
(43) Veröffentlichungstag der Anmeldung: 01.03.2023
(73) Patentinhaber: Reich GmbH Regel- und Sicherheitstechnik, 35713 Eschenburg-Wissenbach (DE)
(72) Erfinder: BENDER, Steffen, 35713 Eschenburg (DE)
(74) Vertreter: Hofstetter, Schurack & Partner

(56) Entgegenhaltungen:
- WO-A1-2012/161087
- DE-A1- 19 747 707
- US-A1- 2009 139 991
- US-A1- 2017 197 515
- US-A1- 2017 297 427

## Beschreibung

Die Erfindung betrifft eine Klappeneinrichtung für ein Fahrzeug gemäß dem Oberbegriff des Patentanspruchs 1. Weiterhin betrifft die Erfindung ein Fahrzeugmit einer derartigen Klappeneinrichtung.

Derartige Klappeneinrichtungen werden beispielsweise bereits bei Kraftwagen als Tankklappen eingesetzt. Hierbei ist ein Basiselement in Form einer Tankmulde vorgesehen, durch welche eine Öffnung begrenzt ist, welche mittels einer Klappe verschlossen ist. Diese Klappe ist zwischen einer zumindest einen Teilbereich der Öffnung überdeckenden und dadurch verschließenden Schließstellung und wenigstens einer den Teilbereich freigebenden Offenstellung relativ zu dem Basiselement in Form der Tankmulde bewegbar gehalten, beispielsweise durch eine entsprechende Schwenklagerung. Außerdem umfasst die Klappeneinrichtung gemäß dem Stand der Technik einen Drück-Drück-Mechanismus (Englisch: push-push-mechanism), welcher durch abwechselndes Ausüben einer Druckkraft auf den Drück-Drück-Mechanismus von dem Schließzustand in einen Öffnungszustand und aus dem Öffnungszustand in einen Schließzustand überführbar ist, in welchem der Drück-Drück-Mechanismus aus dem Öffnungszustand durch Bewegen der Klappe aus der Offenstellung in die Schließzustand überführbar ist. Beim Überführen des Drück-Drück-Mechanismus aus dem Schließzustand in den Öffnungszustand wird dabei mittels diesem die Klappe aus der Schließstellung in die Offenstellung beziehungsweise in Richtung der Offenstellung bewirkt.

Um dabei insbesondere in der Schließzustand der Klappe beziehungsweise des Drück-Drück-Mechanismus ein Öffnen der Klappe zu bewirken, muss diese zunächst über ihren Schließzustand hinaus nach innen gedrückt werden, um hierdurch den Drück-Drück-Mechanismus auszulösen, beziehungsweise diesen aus dem Schließzustand zu lösen und in die Öffnungszustand zu überführen, wobei einhergehend mit dieser Bewegung des Drück-Drück-Mechanismus die Klappe aus der Schließstellung in die Offenstellung verlagert wird. Demzufolge bedingt diese initiale Bewegung der Klappe beziehungsweise des Drück-Drück-Mechanismus aus der Schließstellung beziehungsweise dem Schließzustand nach innen, dass zwischen der Klappe und dem Basiselement keine Dichtung vorhanden sein kann, mittels welcher das Basiselement, beispielsweise eine entsprechende Mulde, gegen die Klappe abgedichtet ist. Dies macht das Basiselement, im vorliegenden Fall beispielsweise die entsprechende Tankmulde, für andere Nutzungen, welche eine abgedichtete Anordnung der Klappe in ihrer Schließstellung an dem Basiselement, beispielsweise an der Mulde erfordern, annähernd unbrauchbar.

Des Weiteren offenbart die DE 197 47 707 A1 eine Tankklappe zum Verschließen einer Tankmulde. Außerdem ist aus der US 2017/0197515 A1 ein zweiteiliger Verschluss für einen Kombi-Ladeanschluss eines Elektrofahrzeugs bekannt.

Aufgabe der vorliegenden Erfindung ist es daher, eine Klappeneinrichtung der eingangs genannten Art zu schaffen, mittels welcher die Klappe auf verbesserte Weise aus ihrer Schließstellung gelöst werden kann beziehungsweise bei welcher insbesondere zwischen der Klappe und dem jeweiligen Basiselement eine Dichtung vorgesehen sein kann.

Diese Aufgabe wird erfindungsgemäß durch eine Klappeneinrichtung sowie ein Fahrzeug mit einer solchen Klappeneinrichtung mit den Merkmalen des Patentanspruchs 1 beziehungsweise 12 gelöst. Vorteilhafte Ausgestaltungen mit zweckmäßigen Weiterbildungen der Erfindung sind Gegenstand der abhängigen Ansprüche.

Die erfindungsgemäße Klappeneinrichtung umfasst ein Basiselement, beispielsweise in Form eines Rahmens, durch welches beziehungsweise welche wenigstens eine Öffnung begrenzt ist. Diese Öffnung ist mit einer Klappe der Klappeneinrichtung, welche zwischen wenigstens einer zumindest einen Teilbereich der Öffnung überdeckenden und dadurch verschließenden Schließstellung und wenigstens einer den Teilbereich freigebenden Offenstellung relativ zu dem Basiselement bewegbar an diesem gehalten ist. Außerdem umfasst die Klappeneinrichtung einen Drück-Drück-Mechanismus, welcher durch abwechselndes Ausüben einer Druckkraft auf den Drück-Drück-Mechanismus aus einem Schließzustand in einen Öffnungszustand und aus dem Öffnungszustand in den Schließzustand überführbar ist, in welchem der Drück-Drück-Mechanismus aus dem Öffnungszustand durch Bewegen der Klappe aus der Offenstellung in die Schließstellung überführbar ist. Beim Überführen des Drück-Drück-Mechanismus aus dem Schließzustand in den Öffnungszustand wird mittels diesem eine Öffnungsbewegung der Klappe aus der Schließstellung in die Offenstellung beziehungsweise in Richtung der Offenstellung bewirkt.

Um nun eine Klappeneinrichtung zu schaffen, mittels welcher die Klappe aus der Schließstellung unmittelbar in die Offenstellung überführt werden kann, ohne dass zunächst eine entgegengesetzte Initialbewegung der gesamten Klappe erforderlich ist, sodass die Klappe beispielsweise auch unter Vermittlung einer Dichtung an dem Basiselement angeordnet werden kann, ist erfindungsgemäß ein separat von der Klappe ausgebildetes und begrenzt bewegbar an der Klappe gehaltenes und dadurch mit der Klappe mit verschwenkbares Betätigungselement vorgesehen, über welches die Druckkraft auf den Drück-Drück-Mechanismus abwechselnd ausübbar und die Öffnungsbewegung der Klappe mittels des Drück-Drück-Mechanismus bewirkbar ist. Demzufolge ist erfindungsgemäße das Betätigungselement in demjenigen Bereich der Klappe angeordnet, in welchem der Drück-Drück-Mechanismus durch Betätigen mittels einer entsprechenden Druckkraft ausgelöst werden kann. Da zum Auslösen erfindungsgemäß nicht die Klappe selbst, sondern lediglich das an dieser gehaltene Betätigungselement genutzt wird, ist die Klappe zum Auslösen des Drück-Drück-Mechanismus in der Schließstellung nicht zunächst mit einer Initialbewegung zu beaufschlagen, bevor diese in entgegengesetzter Richtung in die Offenstellung gelangen kann, sondern kann vielmehr unmittelbar aus der Schließstellung in die Offenstellung gelangen. Dies hat den wesentlichen Vorteil, dass beispielsweise zwischen der Klappe und dem Basiselement, welches beispielsweise als Rahmen oder Mulde ausgebildet sein kann, eine Dichtung vorgesehen werden kann, sodass die Klappe in der Schließstellung dicht am Basiselement angeordnet ist. Bei einer derartigen Dichtung, welche eine hinreichende Dichtkraft bereitstellen muss, wäre es nämlich unmöglich, zunächst eine Initialbewegung der Klappe in der Schließstellung in entgegengesetzter Richtung zur Bewegungsrichtung in die Offenstellung zu bewerkstelligen, da diese durch die Dichtung verunmöglicht wäre. Durch Trennung des Ausübens der Druckkraft nicht mehr mittels der Klappe, sondern vielmehr mittels des Betätigungselements, kann somit insbesondere erreicht werden, dass die Klappe aus ihrer Schließstellung unmittelbar in die Offenstellung bewegt werden kann, ohne zunächst die beschriebene Initialbewegung zum Aktivieren des Drück-Drück-Mechanismus durchführen zu müssen. Dies ermöglicht nicht nur den beschriebenen einfacheren Aufbau und die Möglichkeit zur Anordnung einer Dichtung zwischen der Klappe und dem Basiselement, sondern überdies auch eine intuitive Betätigung der Klappe über das Betätigungselement selbst, welches beispielsweise hierzu farblich oder durch entsprechende Materialgestaltungen vom übrigen Bereich der Klappe abgehoben sein kann.

Die vorliegende Klappeneinrichtung ist insbesondere zur Anordnung an einer Wand eines Fahrzeugs in Form eines Reisemobils oder eines Campervans beziehungsweise Wohnwagens vorgesehen. Natürlich können auch andere mobile Unterkünfte oder andersartige Fahrzeuge mit der Klappeneinrichtung ausgestattet werden. Gegenebenfalls ist die Klappeneinrichtung auch für die Anwendung bei Wänden anderer Einrichtungen wie Bauwerke oder dergleichen denkbar.

Erfindungsgemäß ist es vorgesehen, in der Schließstellung der Klappe und in dem Schließzustand des Drück-Drück-Mechanismus der Drück-Drück-Mechanismus direkt mit dem Betätigungselement, insbesondere formschlüssig, zusammenwirkt, wodurch über das Betätigungselement die Klappe relativ zu dem Basiselement in der Schließstellung gesichert ist. Mit anderen Worten ist insbesondere am entsprechenden Bewegungselement/Stift des Drück-Drück-Mechanismus ein Formschlusselement, beispielsweise eine Verriegelungsnase, vorgesehen, welches mit einem Formschlusselement des Betätigungselements derart zusammenwirkt, dass im Schließzustand des Drück-Drück-Mechanismus und demzufolge in der Schließstellung der Klappe der entsprechende Stift des Drück-Drück-Mechanismus so mit dem Betätigungselement in Eingriff ist, dass dieses und somit auch die Klappe in der Schließstellung fixiert sind. Insbesondere ist es hierbei vorgesehen, dass der Drück-Drück-Mechanismus in seinem Schließzustand mittels einer Verriegelungseinrichtung gesperrt ist, und über diese die Klappe in der Schließstellung gehalten ist. Somit ergibt sich eine besonders günstige Verriegelung der Klappe in der Schließstellung über den sich mit dem klappenseitig angeordneten Betätigungselement in Eingriff befindenden Drück-Drück-Mechanismus.

Außerdem ist es vorgesehen, dass das Betätigungselement auf seiner in der Schließstellung der Klappe und in dem Schließzustand des Drück-Drück-Mechanismus dem Bewegungselement zugewandten Rückseite eine Aufnahme aufweist, wobei durch Bewegen der Klappe und des Betätigungselements aus der Offenstellung in die Schließstellung das sich zumindest in der ausgefahrenen Stellung befindende Bewegungselement zunächst in die Ausnahme hineinbewegbar und daraufhin aus der ausgefahrenen Stellung in die eingefahrene Stellung bewegbar ist, wodurch das Bewegungselement relativ zu dem Betätigungselement drehbar ist, während das Bewegungselement in die Aufnahme eingreift, wodurch in der Schließstellung der Klappe und des Betätigungselements und in der eingefahrenen Stellung des Bewegungselements wenigstens eine Verriegelungsnase des Bewegungselements eine die Aufnahme begrenzende Wandung des Betätigungselements hintergreift, wodurch das Bewegungselement direkt mit dem Betätigungselement formschlüssig zusammenwirkt und über das Betätigungselement die Klappe relativ zu dem Basiselement in der Schließstellung gesichert ist. Hierdurch ergibt sich in besonders einfacher Weise mittels des Drück-Drück-Mechanismus eine Verriegelung und Festlegung der Klappe in der Schließstellung.

In vorteilhafter Ausgestaltung der Erfindung wirkt bei dem Ausüben der Druckkraft auf das Betätigungselement und über das Betätigungselement auf den Drück-Drück-Mechanismus der Drück-Drück-Mechanismus direkt mit dem Betätigungselement zusammen. Vorzugsweise ist hierzu die Klappe derart ausgespart, dass das Betätigungselement unmittelbar mit einem entsprechenden Stift des Drück-Drück-Mechanismus in Kontakt kommt, welcher auf der Rückseite der Klappe beziehungsweise des Betätigungselements mit diesem in Kontakt kommt. Hierdurch ist eine besonders einfache Betätigung des Drück-Drück-Mechanismus mittels des Betätigungselements möglich. Gleichwohl wäre es auch denkbar, eine Kopplungsmechanik zwischen dem Betätigungselement und dem Drück-Drück-Mechanismus vorzusehen, um die Druckkraft mittels des Betätigungselements auf den Drück-Drück-Mechanismus auszuüben.

In weiterer vorteilhafter Ausgestaltung der Erfindung ist die Klappeneinrichtung als eine Muldeneinrichtung ausgebildet, deren Basiselement als ein Gehäuse gestaltet ist, durch welches eine die Öffnung aufweisende Mulde begrenzt ist, in welcher wenigstens ein Anschlusselement angeordnet oder anordenbar ist, über welches ein Medium oder elektrische Energie wenigstens einer Komponente des Fahrzeugs zuführbar und/oder von der Komponente abführbar ist. Eine derartige Mulde ist besonders günstig durch die Klappe sowie gegebenenfalls eine Dichtung abdichtbar, sodass ein Wassereintritt in die Mulde zuverlässig vermieden werden kann.

Weiterhin hat es sich als vorteilhaft gezeigt, wenn ein erstes Dichtungselement vorgesehen ist, mittels welchem in der Schließstellung die Klappe gegen das Basiselement abgedichtet ist. Hierdurch kann auf besonders günstige Weise eine Abdichtung der Klappe gegenüber dem Basiselement geschaffen werden und dennoch eine leicht verschließbare Klappe geschaffen werden.

Eine weitere vorteilhafte Ausführungsform der Erfindung sieht vor, dass wenigstens ein zweites Dichtungselement, mittels welchem das Betätigungselement gegen die Klappe abgedichtet ist. Hierdurch kann auch im Bereich des Betätigungselements eine dichte Anordnung der Klappe beziehungsweise der gesamten Klappeneinrichtung geschaffen werden.

Eine weitere vorteilhafte Ausführungsform der Erfindung sieht vor, dass das Betätigungselement in einen elastischen Drückbereich aufweist, mit dessen Rückseite der Drück-Drück-Mechanismus in Kontakt ist und mittels welchem der Drück-Drück-Mechanismus betätigbar ist. Somit ergibt sich eine äußert einfache Betätigung des Drück-Drück-Mechanismus.

Weiterhin hat es sich als vorteilhaft gezeigt, wenn das Betätigungselement in einer Ausnehmung der Klappe angeordnet ist, deren die Ausnehmung begrenzender Wandungsbereich in Umfangsrichtung des Betätigungselements zumindest teilweise umgrenzt. Insbesondere kann dabei der Wandungsbereiche das Betätigungselement außenumfangsseitig vollständig umgrenzen beziehungsweise das Betätigungselement in einer umlaufenden Öffnung des Wandungsbereichs angeordnet sein. Hierdurch ergibt sich eine besonders günstige Abdichtungsmöglichkeit des Betätigungselements gegenüber der Klappe.

Eine weitere vorteilhafte Ausführungsform sieht vor, dass die Klappe einen Grundkörper und eine separat von dem Grundkörper ausgebildete Blende aufweist, mittels welcher eine zumindest in der Schließstellung von der Öffnung abgewandte Vorderseite des Grundkörpers zumindest überwiegend überdeckt und dadurch verkleidet ist. Durch die Verwendung einer entsprechenden Blende können äußerst einfach unterschiedliche Gestaltungen der Klappe und des Betätigungselements geschaffen werden.

In diesem Zusammenhang hat es sich als weiter vorteilhaft gezeigt, wenn in der Schließstellung der Klappe und in dem Schließzustand des Drück-Drück-Mechanismus das Bewegungselement eine korrespondierende Durchgangsöffnung des Grundkörpers zumindest teilweise durchdringt. Somit ist eine einfache, unmittelbare und direkte Verbindung des Bewegungselements mit dem Betätigungselement zu schaffen.

Eine weitere günstige Ausführungsform der Erfindung sieht vor, dass eine elektrisch betreibbare Verriegelungseinrichtung vorgesehen ist, welche zwischen einem das aus dem Ausüben der Druckkraft auf den Drück-Drück-Mechanismus resultierende Überführen des Drück-Drück-Mechanismus aus dem Schließzustand in den Offenzustand verhindernden und dadurch den Drück-Drück-Mechanismus verriegelnden Verriegelungszustand und einem das aus dem Ausüben der Druckkraft auf den Drück-Drück-Mechanismus resultierende Überführen des Drück-Drück-Mechanismus aus dem Schließzustand in den Offenzustand zulassenden und dadurch den Drück-Drück-Mechanismus freigebenden Freigabezustand umschaltbar ist. Mittels der Verriegelungseinrichtung kann somit in einfacher Weise eine Bewegung des Bewegungselements des Drück-Drück-Mechanismus unterbunden und somit die sich mit dem Bewegungselement in Eingriff befindende Klappe in ihrer Schließstellung festgelegt werden.

Zur Erfindung gehört auch ein Fahrzeug mit wenigstens einer derartigen Klappeneinrichtung, wobei sich dessen Vorteile aus den vorstehend genannten Vorteilen ergeben.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:

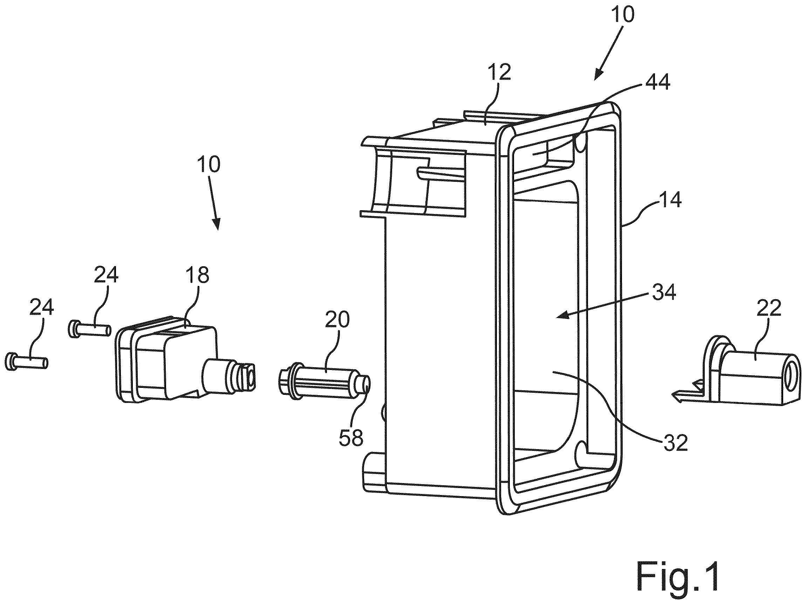

- Fig. 1: eine perspektivische Explosionsdarstellung auf ein als Rahmen gestaltetes Basiselement der erfindungsgemäßen Klappeneinrichtung sowie auf Bauteile eines Drück-Drück-Mechanismus, welcher an dem Basiselement befestigt ist;

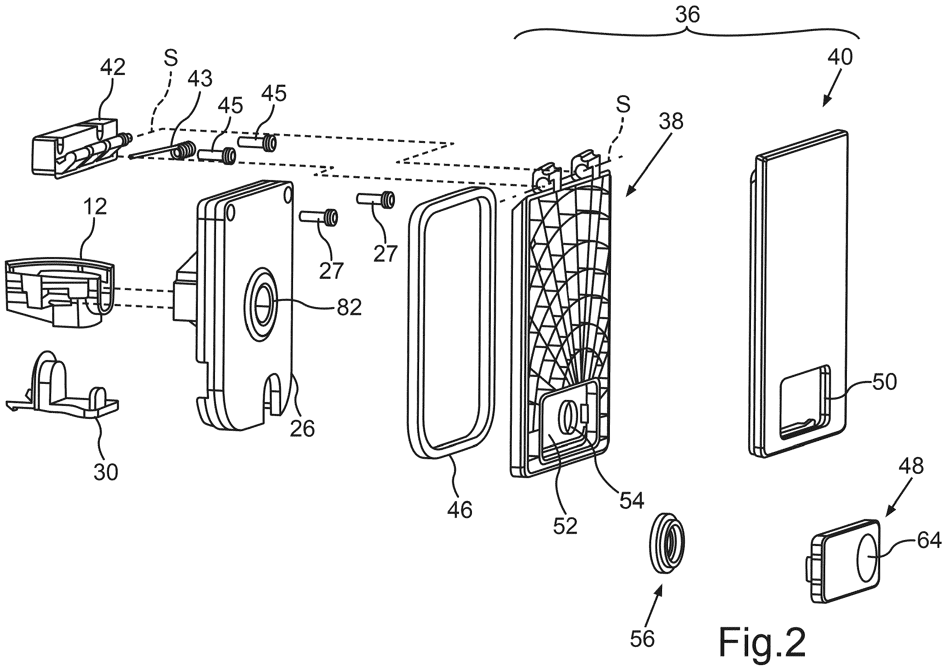

- Fig. 2: eine perspektivische Explosionsdarstellung auf eine Klappe zum Verschließen einer Öffnung des Basiselements, an welcher ein Betätigungselement angeordnet ist, mittels welchem der Drück-Drück-Mechanismus betätigbar ist sowie auf ein Anschlusselement aufweisendes Einsatzteil, welches in das als Rahmen ausgebildete Basiselement einsetzbar ist, wobei über das Anschlusselement eine Medium oder elektrische Energie wenigstens einer Komponente des Fahrzeugs zuführbar und/oder von der Komponente abführbar ist;

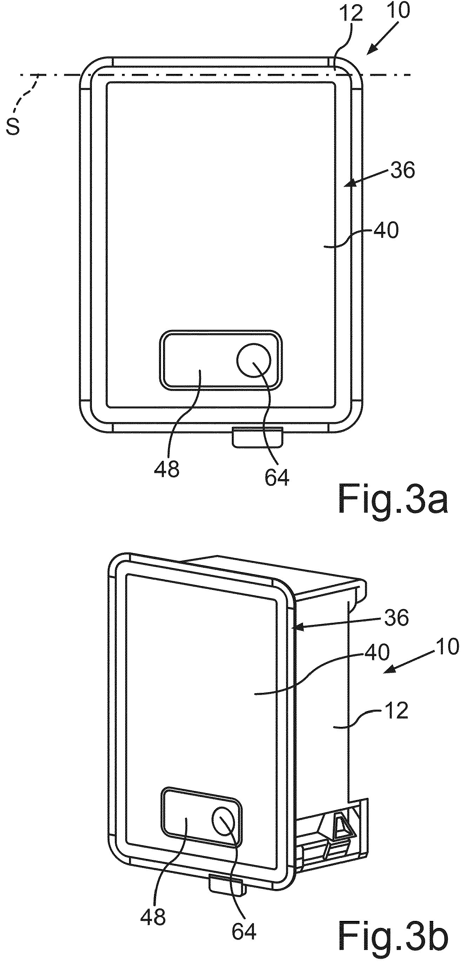

- Fig. 3a, 3b: eine Vorderansicht und eine Perspektivansicht auf die Klappeneinrichtung gemäß der Erfindung mit dem eine Öffnung begrenzenden Basiselement, welche mittels des sich hier in ihrer Schließstellung befindenden Klappe vollständig verschlossen ist, wobei das separate von der Klappe ausgebildete und begrenzt bewegbar an der Klappe gehaltene Betätigungselement erkennbar ist, über welches mittels einer entsprechenden Druckkraft der Drück-Drück-Mechanismus betätigbar ist;

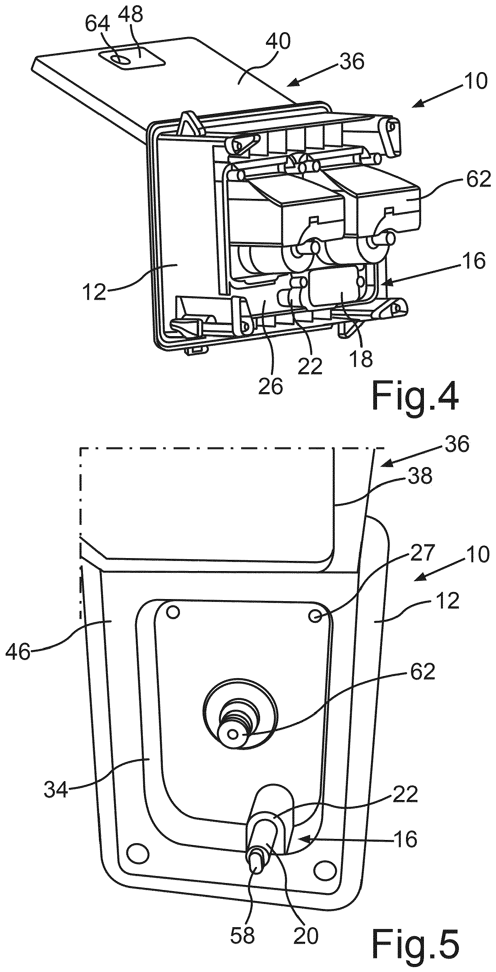

- Fig. 4: eine perspektivische Rückansicht auf eine mögliche Ausführungsform des Basiselements der erfindungsgemäßen Klappeneinrichtung mit der in ihrer Offenstellung dargestellten Klappe;
- Fig. 5: eine perspektivische Vorderansicht auf das eine Mulde ausbildende, das entsprechende Anschlusselement aufnehmende Basiselement bei geöffneter Klappe, wobei außerdem ein Bewegungselement in Form eines Stiftes des Drück-Drück-Mechanismus erkennbar ist, welcher vorliegend aus einem eingefahrenen Schließzustand in einen ausgefahrenen Öffnungszustand bewegt ist;

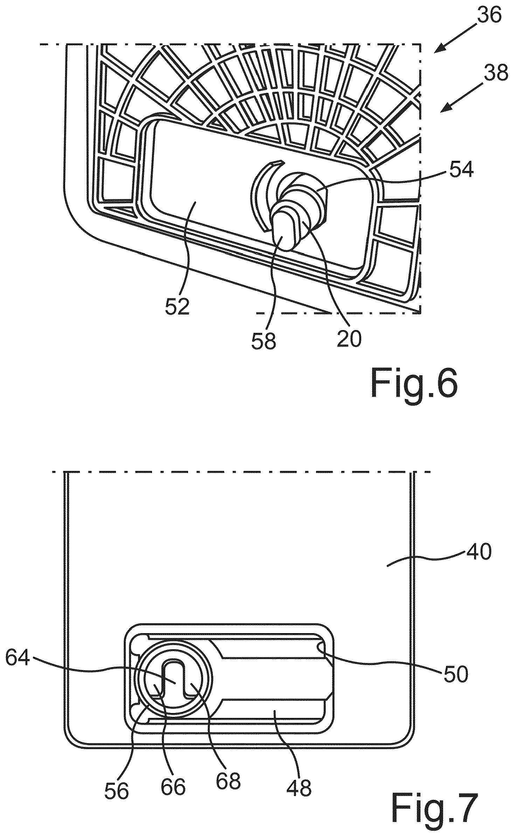

- Fig. 6: eine Vorderansicht auf einen Grundkörper der Klappe, auf welchen eine Blende mit dem Betätigungselement aufsetzbar ist, wobei im Bereich des Betätigungselements eine Aufnahmemulde für das Betätigungselement sowie eine Durchgangsöffnung für das Bewegungselement des Drück-Drück-Mechanismus aufweist, auf welches mittels des Betätigungselements die entsprechende Druckkraft ausübbar ist;
- Fig. 7: eine ausschnittsweise Innenansicht auf das Betätigungselement mit einer Aufnahme, welche formschlüssig mit einer Verriegelungsnase des Bewegungselements zusammenwirkt und von einem Dichtungselement umgeben ist, mittels welchem die Klappe beziehungsweise das Betätigungselement gegen den Grundkörper der Klappe abgedichtet ist;

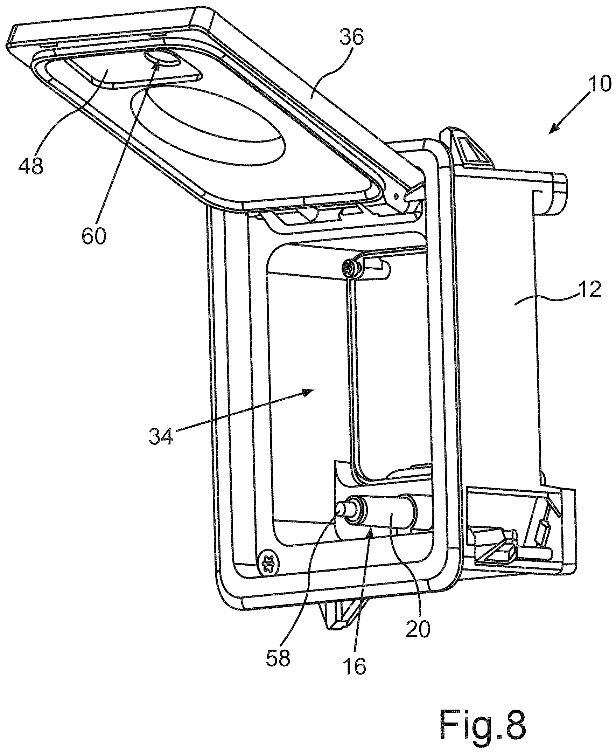

- Fig. 8: eine weitere perspektivische Vorderansicht auf das eine Mulde ausbildende Basiselement bei geöffneter Klappe;

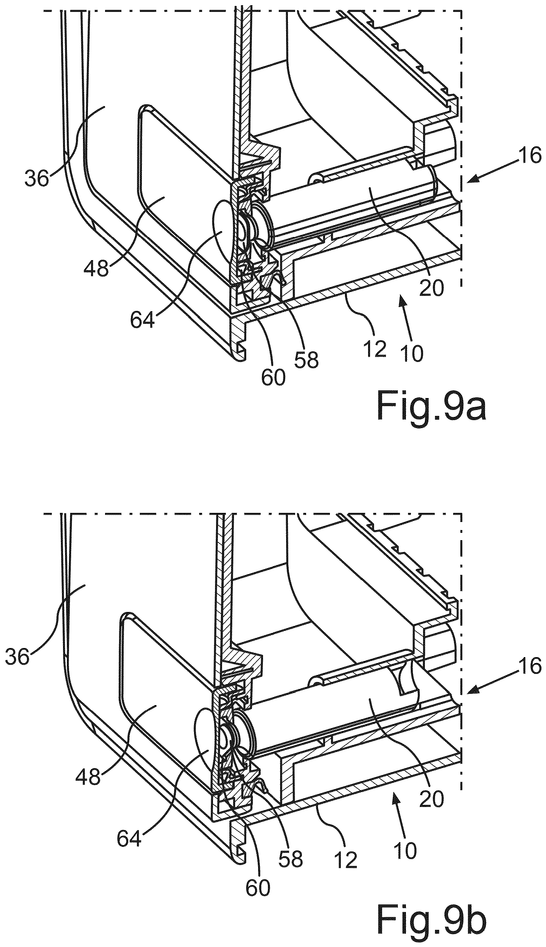

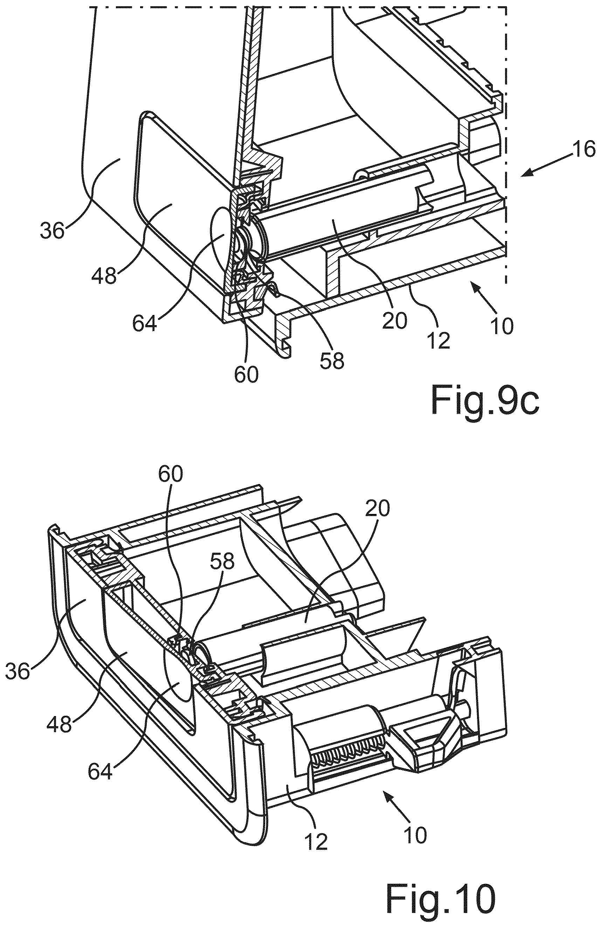

- Fig. 9a, b, c: jeweilige ausschnittweise, in Hochrichtung geschnittene Perspektivansichten auf die Klappeneinrichtung mit dem Basiselement und der Klappe, wobei anhand der Fig. 9a, b und c eine Abfolge der Verlagerungsbewegung des Bewegungselement zwischen dem Schließzustand und dem Öffnungszustand aus der Mulde des Basiselements heraus und um eine Vierteldrehung verdreht erkennbar ist, infolge derer sich am äußeren Ende des Bewegungselements eine Verriegelungsnase mitbewegt und hierdurch mit einer Aufnahme auf der Rückseite des Betätigungselements außer Eingriff kommt, wobei infolge der Verlagerungsbewegung des Bewegungselements außerdem die Klappe leicht geöffnet wird; und
- Fig. 10: eine ausschnittweise, in Querrichtung geschnittene Perspektivansicht auf die Klappeneinrichtung mit dem Basiselement und der Klappe, wobei wiederum die Verbindung des Bewegungselements des Drück-Drück-Mechanismus mit dem klappenseitigen Betätigungselement erkennbar ist.

In Fig. 1 ist in einer perspektivischen Explosionsdarstellung von einer Klappeneinrichtung ein Basiselement 10 dargestellt, welches einen Rahmen 12 umfasst. Dieser Rahmen 12 ist beispielsweise in eine entsprechend angepasste, etwa rechteckförmige Aufnahmeöffnung einer nicht weiter erkennbaren Wand des Fahrzeugs einsetzbar bis ein umlaufender Kragen 14 an dieser Wand anliegt. Neben dem Rahmen 12 ist in Fig. 1 ein Drück-Drück-Mechanismus 16 erkennbar, welcher als wesentliche Bauteile ein Gehäuse 18 aufweist, innerhalb welchem wesentliche Komponenten der Mechanik des Mechanismus 16 untergebracht sind, sowie ein Bewegungselement 20 in Form eines Stifts, welcher innerhalb einer Halterung 22 aufgenommen ist, mittels welchem sowohl das Bewegungselement 20 als auch das Gehäuse 18 am Rahmen angeordnet sind. Überdies sind zwei Schrauben 24 erkennbar, mittels welchen das Gehäuse 18 ebenfalls rahmenseitig fixiert ist.

In Fig. 2 ist in einer perspektivischen Explosionsdarstellung zunächst ein Einsatzteil 26 erkennbar, an dessen Rückseite die Bauteile 28 und 30 angeordnet sind. Das Einsatzteil 26 ist dabei in eine Aufnahmeöffnung 32 des Rahmens 12 des Basiselements 10 einsetzbar, sodass sich - auf in weiterem noch näher erläuterte Weise - eine Muldeneinrichtung ausbildet, in deren durch die Aufnahmeöffnung 32 gebildete Mulde 34 unter anderem eine im Weiteren noch näher erläutertes Anschlusselement 64 für ein Medium, ein Signal oder elektrische Energie ausgebildet ist.

Weiterhin ist in Fig. 2 von der Klappeneinrichtung eine Klappe 36 erkennbar, welche durch einen Grundkörper 38 und eine außenseitig an diesem fixierbare Blende 40 gebildet ist Die Klappe 36 beziehungsweise der Grundkörper 38 sind hierbei unter Vermittlung einer Lagereinrichtung 42 schwenkbar am Basiselement 10 gelagert. Hierzu ist die etwa quaderförmige ausgebildete Lagereinrichtung 42 innerhalb einer Aufnahme 44 des Rahmens 12 des Basiselements 10 mittels jeweiliger Schrauben 45 befestigt. Die Lagereinrichtung 42 umfasst hierbei eine Feder 46, sodass die Klappe 36 im vorliegenden Fall um eine horizontal entlang ihrer Spaltseite verlaufenden Schwenkachse S federnd in ihrer Offenstellung gehalten ist.

Zwischen dem Grundkörper 38 der Klappe 36 und dem Rahmen 12 des Basiselements 10 ist ein rechteckiges, umlaufendes Dichtungselement 46 angeordnet, sodass das Innere der Muldeneinrichtung beziehungsweise die Mulde 34 im Inneren des Basiselements 10 bei sich in der Schließstellung befindender Klappe 36 dicht ausgebildet ist.

Schließlich zeigt Fig. 2 ein Betätigungselement 48, welches eine etwa rechteckförmige Grundkontur aufweist und in einer hieran angepassten Ausnehmung 50 innerhalb der Blende 40 der Klappe 36 flächenbündig zu dieser aufgenommen ist.

Korrelierend zu der Ausnehmung 50 ist innerhalb des Grundkörpers 38 der Klappe 36 eine Aufnahmemulde 52 für das Betätigungselement 48 vorgesehen, sodass eine weitere noch näher erläuterte freie Bewegbarkeit des Betätigungselements 48 relativ zur Klappe 36 möglich ist.

Im Bereich der Aufnahmemulde 56 ist der Grundkörper 38 von einer Durchgangsöffnung 54 durchsetzt, innerhalb welcher das als Stift ausgebildete Bewegungselement 20 des Drück-Drück-Mechanismus 16 angeordnet ist.

Außenumfangsseitig der Durchgangsöffnung 54 ist ein zweites Dichtungselement 56 angeordnet, durch welches der Grundkörper 38 der Klappe 36 gegen das Betätigungselement 48 abgedichtet ist.

In den Figuren 3a und 3b ist in einer Vorderansicht beziehungsweise in einer Perspektivansicht die Klappeneinrichtung gemäß den Figuren 1 und 2 bei sich in der Schließstellung befindender Klappe 36 dargestellt. Hierbei ist erkennbar, dass die durch die Mulde 34 gebildete Öffnung des Basiselements 10 durch die Klappe 36 vorliegend vollständig und durch das Dichtungselement 46 dicht verschlossen ist. Gleichwohl wäre es auch denkbar, dass die entsprechende Öffnung des Basiselements 10 zumindest lediglich in einem Teilbereich von der sich in ihrer Schließstellung befindenden Klappe 36 verschlossen ist. Dach Dichtungselement 46 kann theoretisch auf Seiten der Klappe 36 am Grundkörper 38 oder aber am Rahmen 12 des Basiselements 10 angeordnet sein.

Aus dieser, in den Figuren 3a und 3b gezeigten Schließstellung ist die Klappe 36 in eine die Öffnung beziehungsweise Mulde 34 zumindest in einem Teilbereich freigebende Offenstellung relativ zu dem Basiselement 10 bewegbar und an diesem gehalten verschwenkbar, wie dies in den Figuren 4 und 5 dargestellt ist. Im vorliegenden Fall erfolgt die Lagerung mittels der bereits beschriebenen Lagereinrichtung 42, mittels welcher die Klappe 36 an ihrer oberen Schmalseite um eine etwa horizontal verlaufende Schwenkachse S gelagert ist. Das Federelement 43 bewirkt hierbei eine Halterung der Klappe der in den Figuren 4 und 5 gezeigten Offenstellung.

Insbesondere in Fig. 5 ist dabei in einer perspektivischen Vorderansicht bei geöffneter Klappe 36 erkennbar, in welcher Weise der Drück-Drück-Mechanismus 16 wirkt. Im vorliegenden Fall ist durch Ausüben einer entsprechenden Druckkraft auf das Bewegungselement beziehungsweise dem Stift 20 dieser aus einem Schließzustand, in welchem dieser beispielsweise nur knapp aus der Halterung 22 herausragt, in einen Öffnungszustand überführt worden, in welchem durch das Bewegungselement 20 wesentlich weiter über die Halterung 22 in Richtung nach außen hin heraussteht und demzufolge die Klappe 36 aus ihrer Schließstellung gemäß den Figuren 3a und 3b leicht nach außen ausstellt, sodass die Klappe 36 beispielsweise manuell in die in Fig. 5 erkennbare Offenstellung verlagert werden kann, in welcher diese beispielsweise durch das Federelement 43 gehalten ist.

Wird demzufolge das Bewegungselement 20, welches sich zunächst in dem Schließzustand befindet, von außen her mittels des Betätigungselements 48 mit einer Druckkraft beaufschlagt, so führt dies zunächst zu einer kleinen und begrenzten Initialisierungsbewegung in Richtung in die Mulde 34 hinein bis zu einem Anschlag, wonach das Bewegungselement 20 ausrastet und in den in Fig. 5 gezeigten Öffnungszustand gelangt. Wird das Bewegungselement 20 in diesem Öffnungszustand wiederum mit einer Druckkraft in Richtung zur Mulde 34 hin beaufschlagt, so wird dieses in die Halterung 22 hineinbewegt und verrastet in Folge des sich innerhalb des Gehäuses 18 befindenden Mechanismus wiederum im Schließzustand. Da dem Fachmann prinzipiell derartige Drück-Drück-Mechanismen bekannt sind, beispielsweise aus dem Einsatz bei Tankmulden von Kraftwagen, wird im Weiteren nicht näher auf die sich innerhalb des Gehäuses 18 befindende Mechanik eingegangen.

Die Mechanik des Drück-Drück-Mechanismus 16 bewirkt außerdem, dass das Bewegungselement 20 bei der Verlagerungsbewegung zwischen dem Schließzustand und dem Öffnungszustand um eine Vierteldrehung, also um etwa 90° um seine Längsmittelachse verdreht wird. Hierdurch verdreht sich auch am äußeren Ende des Bewegungselements beziehungsweise Stifts 20 eine Verriegelungsnase 58, welche hierdurch - wie dies im Weiteren in Zusammenschau mit Fig. 7 noch näher erläutert werden wird - mit einer Aufnahme 60 auf der Rückseite des Betätigungselements 48 in Eingriff beziehungsweise außer Eingriff kommt. Die Verriegelungsnase 58 erstreckt sich im Öffnungszustand des Bewegungselements 20, wie dies in Fig. 5 erkennbar ist, in Vertikalrichtung des Basiselements 10 und ist demzufolge hier nicht in Eingriff mit der Aufnahme 60 des Betätigungselements 48. In der hier nicht gezeigten Schließstellung des Drück-Drück-Mechanismus 16 beziehungsweise des Bewegungselements 20 hingegen befindet sich die Verriegelungsnase 58 in ihrer Ausrichtung in etwa in Querrichtung zu dem Basiselement 10, also um die besagten 90° versetzt zu der in Fig. 5 gezeigten Lage. Mit anderen Worten vollführt das Bewegungselement 20 und mithin die Verriegelungsnase 58 bei der Bewegung zwischen dem Schließzustand und dem Öffnungszustand - und zurück - nicht nur eine lineare Bewegung in Richtung nach außen beziehungsweise nach innen des Basiselements 10, sondern durch die Vierteldrehung überlagert zu einer Art schraubenartiger Bewegung.

In Zusammenschau der Figuren 4 und 5 ist zudem nochmals erkennbar, dass die Klappeneinrichtung vorliegend als Muldeneinrichtung mit der Mulde 34 ausgebildet ist, innerhalb welcher das Anschlusselement 62 angeordnet ist, welches seinerseits am Einsatzteil 26 befestigt ist, und beispielsweise zum Zuführen und/oder Abführen eines Mediums, eines Signals oder elektrischer Energie zu einer Komponente des Fahrzeugs dient. Beispielsweise kann das Anschlusselement 62 als Wasser- oder Stromanschluss (siehe Fig. 4), als Anschluss für ein Satellitensignal, als USB-Anschluss oder dergleichen ausgebildet sein, oder aber beispielsweise als Abwasseranschluss oder dergleichen dienen. Natürlich sind auch andere Funktionen des Anschlusselements 62 denkbar.

Ebenfalls kann die Klappeneinrichtung dazu ausgebildet sein, lediglich eine fensterartige, durch die Innenklappe 36 geschlossene Durchgangsöffnung, Fensteröffnung oder dergleichen zu bilden, über welche der Innenraum des Fahrzeugs mit dem Außenbereich verbunden ist. Wesentlich für die Klappeneinrichtung ist jedoch, dass ein Basiselement 10 vorgesehen ist, welches zumindest in einem Teilbereich durch die Klappe 36 verschlossen werden kann.

In Fig. 6 ist ein einer ausschnittsweisen Perspektivansicht nochmals der Grundkörper 38 der Klappe 36 im Bereich der Aufnahmemulde 52 für das Betätigungselement 48 gezeigt. Insbesondere ist hierbei nochmals die Durchgangsöffnung 54 im Bereich der Aufnahmemulde 52 erkennbar, welche durch das sich hier in seinem Öffnungszustand befindende Bewegungselement 20 durchsetzt ist.

In Zusammenschau mit Fig. 7 wird dabei klar, in welcher Weise das Betätigungselement 48 mit dem Bewegungselement 20 des Drück-Drück-Mechanismus 16 zusammenwirkt. Fig. 7 zeigt hierbei in einer ausschnittsweisen Rückansicht die Blende 40 der Klappe 36 mit dem in der Ausnehmung 50 eingesetzten Betätigungselement 48.

Das Betätigungselement 48 ist hierbei separat von der Klappe 36 ausgebildet und aus einer ungedrückten Stellung, in welcher das Bestätigungselement 48 hier - wie dies aus den Figuren 3a und 3b erkennbar ist - etwa flächenbündig mit der Vorderseite der Blende 40 abschließt, in einen gedrückten Zustand zu überführen, in welcher dieses relativ zur Blende 40 beziehungsweise zur Klappe 36 in eine gedrückte Stellung überführbar ist. Beispielsweise kann hierzu das Betätigungselement 48 schwenkbar an der Blende 40 gelagert sein. Auch andere Lagerungen oder Führungen sind hierbei denkbar. Insbesondere ist es auch denkbar, einen sich in Überdeckung mit dem Bewegungselement 20 befindenden, hier etwa kreisförmigen Drückbereich 64 entsprechend elastisch auszubilden, sodass durch Drücken dieses Drückbereichs 64 eine Druckkraft auf das Bewegungselement 20 ausgeübt werden kann. Auch eine elastische Ausgestaltung des Drückbereichs 64 und gleichzeitig eine entsprechende Lagerung des Betätigungselements 48 sind denkbar. Im Ergebnis jedenfalls soll das Betätigungselement 48 beziehungsweise dessen Drückbereich 64 begrenzt bewegbar relativ zur Klappe 36 ausgebildet sein, sodass bei ortsfest in der Schließstellung sich befindender Klappe 36 dennoch eine entsprechende Druckkraft auf das als Stift ausgebildete Bewegungselement 20 des Drück-Drückmechanismus bewirkt werden kann.

Insbesondere aus Fig. 7 ist dabei erkennbar, dass die Aufnahme 60 für die Verriegelungsnase 58 als etwa quaderförmige Kassette mit einer in Richtung zum Grundkörper 38 gegenüber dem Drückbereich 64 nach innen zurückspringenden Wand 66 umfasst, innerhalb welcher eine rechteckförmige, an die Gestalt der Verriegelungsnase 58 angepasste Aussparung 68 vorgesehen ist. Somit kann die Verriegelungsnase 58 - wenn sich das Bewegungselement 20 gemäß Fig. 6 in seinem Öffnungszustand befindet - aus der Aussparung 68 der Wand 66 herausbewegt werden. Im Öffnungszustand des Bewegungselements 20 sind demzufolge die Verriegelungsnase 58 und die Aufnahme 60 außer Eingriff. Ist hingegen das Bewegungselement 20 in seinen Schließzustand überführt und demzufolge die Verriegelungsnase 58 gegenüber der in Fig. 6 dargestellten Position um eine Vierteldrehung gedreht, so hintergreift die Verriegelungsnase 58 im Bereich der Aussparung 60 die Wand 66 der Aufnahme 60 und somit befindet sich die Verriegelungsnase 58 in formschlüssigem Eingriff mit der Aufnahme 60. Demzufolge ist im Schließzustand des Bewegungselements 20 des Drück-Drück-Mechanismus 16 die sich in der Schließstellung befindende Klappe 36 - unter Vermittlung des Betätigungselements 48 - formschlüssig mit dem Bewegungselement 20 verbunden und somit sicher in der Schließstellung gehalten.

Soll nun die Klappe 36 geöffnet werden, so ist durch das begrenzt relativ zur Klappe 36 bewegbare Betätigungselement 48 das Bewegungselement 20 des Drück-Drück-Mechanismus 16 mit einer nach Richtung innen der Mulde 34 gerichteten Druckkraft beaufschlagbar, welche eine Initialbewegung des Bewegungselements 20 um einen kurzen Weg nach innen bewirkt, bevor das Bewegungselement 20 infolge des Auslösens des Drück-Drück-Mechanismus 16 in den Öffnungszustand bewegt und somit die Klappe 16 um einen bestimmten Winkelbetrag unterseitig nach außen ausgestellt wird. Durch die damit einhergehende schraubenartige Verdrehung des Bewegungselements um 90° kommt außerdem dessen Verriegelungsnase 58 außer Eingriff mit der Aufnahme 60 an der Innenseite des Betätigungselements 48, sodass nunmehr die Klappe 36 vom Bewegungselement 20 des Drück-Drück-Mechanismus 16 gelöst und frei geöffnet werden kann, bis dieses die Offenstellung gemäß den Fig. 4 und 5 erreicht. Das Bewegungselement 20 des Drück-Drück-Mechanismus 16 verbleibt hierbei in der in den Fig. 5 und 6 gezeigten Stellung, bis die Klappe 36 wieder manuell geschlossen wird und im Verlauf der Schließbewegung die Rückseite des Betätigungselements 48 im Bereich der Aufnahme 60 mit der Verriegelungsnase 58 des Bewegungselements 20 des Drück-Drück-Mechanismus 16 in Anlage kommt. Die Klappe 36 ist dann noch um den bereits beschriebenen Winkelbetrag geöffnet. Durch Ausüben einer Druckkraft auf die Klappe 36 oder das Betätigungselement 48 kann sodann die entsprechende Druckkraft zum Verlagern des Bewegungselements 20 des Drück-Drück-Mechanismus 16 aus dem in den Fig. 5 und 6 gezeigten Öffnungszustand in den Schließzustand in Richtung nach innen der Mulde 34 zu bewirken. Hierbei vollführt das Bewegungselement 20 wieder die besagte Vierteldrehung, wodurch die außenseitig des Bewegungselements 20 angeordnete Verriegelungsnase 58 wiederum verriegelnd mit der Aufnahme 60 in Eingriff kommt und demzufolge die Klappe 36 in ihrer Schließstellung am Basiselement 10 gehalten ist, und zwar mittels des Drück-Drück-Mechanismus 16, dessen außenseitig des Bewegungselements 20 angeordnete Verriegelungsnase 58 in Eingriff mit der Aufnahme 60 des Betätigungselements 48 auf Seiten der Klappe 36 ist.

Insgesamt ist somit erkennbar, dass vorliegend ein Drück-Drück-Mechanismus 16 gegeben ist, welcher durch abwechselndes Ausüben einer Druckkraft auf den Drück-Drück-Mechanismus 16 aus einem Schließzustand in den Öffnungszustand und aus dem Öffnungszustand in den Schließzustand überführbar ist, in welchen der Drück-Drück-Mechanismus 16 aus dem Öffnungszustand durch Bewegen der Klappe 36 aus der Offenstellung in die Schließstellung bewegbar ist, wobei bei dem Bewegen des Drück-Drück-Mechanismus 16 aus dem Schließzustand in den Öffnungszustand mittels des Drück-Drück-Mechanismus 16 eine Öffnungsbewegung der Klappe 36 aus der Schließstellung in die Offenstellung oder in Richtung der Offenstellung bewirkbar ist. Hierzu ist das separat von der Klappe 36 ausgebildete und begrenzt bewegbar an der Klappe 36 gehaltene und dadurch mit der Klappe 36 mitschwenkbare Betätigungselement 48 vorgesehen, über welches die Druckkraft auf den Drück-Drück-Mechanismus 16 abwechselnd ausübbar und die Öffnungsbewegung der Klappe 36 mittels des Drück-Drück-Mechanismus 16 bewirkbar ist.

Besonders vorteilhaft ist außerdem, dass das Bewegungselement 20 in der Schließstellung der Klappe 36 beziehungsweise im Schließzustand des Bewegungselements 20 mittels einer Verriegelungseinrichtung gesichert sein kann. Diese Verriegelungseinrichtung kann beispielsweise ein Sperrteil, beispielsweise eine Sperrklinke, einen Sperrriegel oder dergleichen aufweisen, welches im Schließzustand des Bewegungselements 20 in eine an diesem vorgesehene Vertiefung formschlüssig eingreift, sodass beim Ausüben einer Druckkraft das Bewegungselement 20 nicht bewegt werden kann und demzufolge verriegelt ist. Wird die Verriegelungseinrichtung gelöst und kommt demzufolge eine Sperrklinke, ein Sperrriegel oder dergleichen außer Eingriff mit einer entsprechenden Ausnehmung am Bewegungselement 20, so ist dieses wieder frei bewegbar und kann durch Ausüben jeweiliger Druckkräfte zwischen seinem Schließzustand und seinem Öffnungszustand bewegt werden. Es ist erkennbar, dass somit durch eine Verriegelungseinrichtung, welche nicht die Klappe 36 verriegelt, sondern vielmehr die Klappe 36 lediglich mittelbar über das Bewegungselement 20 des Drück-Drück-Mechanismus 16 verriegelt, eine weitaus einfachere Gestaltung erzielt werden kann. Die Verriegelungseinrichtung kann dabei beispielsweise an die Zentralverriegelung des Fahrzeugs angeschlossen sein, beispielsweise durch eine elektrische oder gegebenenfalls auch eine mechanische Verbindung, beispielsweise über einen Bowdenzug. Gegebenenfalls kann die Verriegelungseinrichtung auch als elektrischer Aktor oder dergleichen ausgebildet sein, welcher beispielsweise durch ein mobiles Endgerät, beispielsweise ein Mobiltelefon, ein Tablet-Computer oder dergleichen, steuerbar ist.

Ein wesentlicher Vorteil der Klappeneinrichtung ist es, dass vorliegend auf das Bewegungselement 20 des Drück-Drück-Mechanismus 16 in der Schließstellung der Klappe 36 eine Druckkraft ausgeübt werden kann, obwohl die Klappe 36 infolge der durch das Dichtungselement 46 bewirkten, zumindest annähernd starren Anordnung in der Schließstellung nicht möglich ist. Die Ausübung der Druckkraft, welche infolge der dichtenden Anordnung der Klappe 36 nicht durch diese selbst ermöglicht ist, wird erfindungsgemäß durch das Betätigungselement 48 vorgenommen, welches beweglich relativ zur Klappe 36 angeordnet ist und demzufolge ermöglicht, dass eine Druckkraft auf das Bewegungselement 20 mittels des Betätigungselements 48 ausgeübt wird, obwohl die Klappe 36 ortsfest verbleibt. Somit ist einerseits eine dichtende Anordnung der Klappe 36 an dem Basiselement 10 ermöglicht und andererseits die Nutzung eines Drück-Drück-Mechanismus 16, welcher das Ausüben einer entsprechenden Druckkraft erfordert. Diese erfolgt durch das begrenzt relativ zur Klappe bewegbare Betätigungselement 48.

Damit das Betätigungselement 48 selbst auch dicht gegenüber der Klappe 36 ausgebildet ist, ist vorzugsweise das Dichtungselement 56 außenumfangsseitig der Aufnahme 60 beziehungsweise der Durchgangsöffnung 54 im Bereich der Aufnahmemulde 52 angeordnet.

Ein weiterer Vorteil ist es, dass das Betätigungselement 48 farblich vom übrigen Bereich der Blende 40 abgehoben oder durch andersartige Materialgestaltung gekennzeichnet sein kann, um hierdurch eine intuitive Betätigung zu ermöglichen. Zudem kann der Drückbereich 64 konkav zurückspringenden ausgebildet sein und/oder eine zum angrenzenden Bereich unterschiedliche Oberflächenbeschaffenheit aufweisen, um zu signalisieren, im welchem Bereich das Betätigungselement 48 betätigt werden muss. Der Drückbereich 64, welcher seinerseits entweder steif ausgebildet ist oder elastisch nachgiebig, ermöglicht dabei eine ortsgenaue Aktivierung des Drück-Drück-Mechanismus 16, das sich dieser vorzugsweise in Überdeckung mit dem Bewegungselement 20 befindet. Im vorliegenden Fall wirkt das Betätigungselement 54 unmittelbar auf das Bewegungselement 20. Gegebenenfalls wäre hier auch eine Kopplungsmechanik denkbar.

Fig. 8 zeigt analog zu Fig. 5 eine weitere perspektivische Vorderansicht auf das die Mulde 34 ausbildende Basiselement 10 bei geöffneter Klappe 36. Insbesondere erkennbar ist dabei das Bewegungselement 20 des Drück-Drück-Mechanismus 16 mit dessen Verriegelungsnase 58 sowie auf der der Mulde 34 zugewandten Rückseite der Klappe 36 die Anordnung des Betätigungselements 48 mit dessen Aufnahme 60, welches vorliegend außer Eingriff mit der Verriegelungsnase 58 auf Seiten des Bewegungselement 20 des Drück-Drück-Mechanismus 16 ist.

Die Fig. Fig. 9a, b, c zeigen jeweilige ausschnittweise, in Hochrichtung geschnittene Perspektivansichten auf die Klappeneinrichtung mit dem Basiselement 10 und der Klappe 36, wobei anhand der Fig. 9a, b und c eine Abfolge der Verlagerungsbewegung des Bewegungselements 20 zwischen dem Schließzustand und dem Öffnungszustand aus der Mulde 34 des Basiselements 10 heraus und um eine Vierteldrehung verdreht erkennbar ist, infolge derer sich am äußeren Ende des Bewegungselements 20 die Verriegelungsnase 58 mitbewegt und hierdurch mit einer Aufnahme 60 auf der Rückseite des Betätigungselements 48 außer Eingriff kommt, wobei infolge der Verlagerungsbewegung des Bewegungselements 20 in Richtung nach außen außerdem die Klappe 36 leicht geöffnet wird.

Fig. 9a zeigt hierbei die verriegelte Position der Verriegelungsnase 58 in der Aufnahme 60 des sich im Schließzustand befindenden Betätigungselements 48, in welcher die Klappe 36 in ihrer Schließstellung gehalten ist. Fig. 9b zeigt eine Zwischenstellung bei der Verlagerungsbewegung des Bewegungselements 20 zwischen dem Schließzustand und dem Öffnungszustand, wobei sich die Klappe nach wie vor in der Schließstellung befindet. Fig. 9c zeigt schließlich das Bewegungselement 20 und somit auch die Verriegelungsnase 58 im Öffnungszustand, wodurch die Klappe 36 leicht ausgestellt wird und die Verriegelungsnase 58 außer Eingriff mit der Aufnahme 60 des Betätigungselements 48 ist, wodurch die Klappe 36 geöffnet werden kann.

Fig. 10 zeigt schließlich eine ausschnittweise, in Querrichtung geschnittene Perspektivansicht auf die Klappeneinrichtung mit dem Basiselement 10 und der Klappe 36, wobei wiederum die Verbindung des Bewegungselements 20 des Drück-Drück-Mechanismus 16 mit dem klappenseitigen Betätigungselement 48 erkennbar ist.

## Patentansprüche

1. Klappeneinrichtung für ein Fahrzeug, mit einem Basiselement (10), durch welches wenigstens eine Öffnung (34) begrenzt ist, mit einer Klappe (36), welche zwischen wenigstens einer zumindest einen Teilbereich der Öffnung (34) überdeckenden und dadurch verschließenden Schließstellung und wenigstens einer den Teilbereich freigebenden Offenstellung relativ zu dem Basiselement (10) bewegbar an diesem gehalten ist, und mit einem Drück-Drück-Mechanismus (16), welcher durch abwechselndes Ausüben einer Druckkraft auf den Drück-Drück-Mechanismus (16) aus einem Schließzustand in einen Öffnungszustand und aus dem Öffnungszustand in den Schließzustand überführbar ist, in welchen der Drück-Drück-Mechanismus (16) aus dem Öffnungszustand durch Bewegen der Klappe (36) aus der Offenstellung in die Schließstellung bewegbar ist, wobei bei dem Bewegen des Drück-Drück-Mechanismus (16) aus dem Schließzustand in den Öffnungszustand mittels des Drück-Drück-Mechanismus (16) eine Öffnungsbewegung der Klappe (36) aus der Schließstellung in die Offenstellung oder in Richtung der Offenstellung bewirkbar ist, und wobei die Klappeneinrichtung ein separat von der Klappe (36) ausgebildetes und begrenzt bewegbar an der Klappe (36) gehaltenes und dadurch mit der Klappe (36) mitschwenkbares Betätigungselement (48) aufweist, über welches die Druckkraft auf den Drück-Drück-Mechanismus (16) abwechselnd ausübbar und die Öffnungsbewegung der Klappe (36) mittels des Drück-Drück-Mechanismus (16) bewirkbar ist,
**dadurch gekennzeichnet, dass**
der Drück-Drück-Mechanismus (16) ein Bewegungselement (20) aufweist, welches durch abwechselndes Ausüben der Druckkraft auf das Bewegungselement (20) relativ zu dem Basiselement (10) entlang einer Bewegungsachse translatorisch und um die Bewegungsachse rotatorisch zwischen einer eingefahrenen Stellung, in welcher sich das Bewegungselement (20) in dem Schließzustand des Drück-Drück-Mechanismus (16) befindet, und einer ausgefahrenen Stellung hin und her bewegbar ist, in welcher sich das Bewegungselement (20) in dem Öffnungszustand des Drück-Drück-Mechanismus (16) befindet, wobei das Betätigungselement (48) auf seiner in der Schließstellung der Klappe (36) und in dem Schließzustand des Drück-Drück-Mechanismus (16) dem Bewegungselement (20) zugewandten Rückseite eine Aufnahme (60) aufweist, wobei durch Bewegen der Klappe (36) und des Betätigungselements (48) aus der Offenstellung in die Schließstellung das sich zunächst in der ausgefahrenen Stellung befindende Bewegungselement (20) zunächst in die Aufnahme (60) hineinbewegbar und daraufhin aus der ausgefahrenen Stellung in die eingefahrene Stellung bewegbar ist, wodurch das Bewegungselement (20) relativ zu dem Betätigungselement (48) drehbar ist, während das Bewegungselement (20) in die Aufnahme (60) eingreift, wodurch in der Schließstellung der Klappe (36) und des Betätigungselements (48) und in der eingefahrenen Stellung des Bewegungselements (20) wenigstens eine Verriegelungsnase (58) des Bewegungselements (20) eine die Aufnahme (60) begrenzende Wand (66) des Betätigungselements (20) hintergreift, wodurch das Bewegungselement (20) direkt mit dem Betätigungselement (48) formschlüssig, zusammenwirkt und über das Betätigungselement (48) die Klappe (36) relativ zu dem Basiselement (10) in der Schließstellung gesichert ist.

2. Klappeneinrichtung nach Anspruch 1,
**dadurch gekennzeichnet, dass**
bei dem Ausüben der Druckkraft auf das Betätigungselement (48) und über das Betätigungselement (48) auf den Drück-Drück-Mechanismus der Drück-Drück-Mechanismus (48) direkt mit dem Betätigungselement (48) zusammenwirkt.

3. Klappeneinrichtung nach Anspruch 1 oder 2,
**dadurch gekennzeichnet, dass**
die Klappeneinrichtung als eine Muldeneinrichtung ausgebildet ist, deren Basiselement (10) als ein Gehäuse ausgebildet ist, durch welches eine die Öffnung aufweisende Mulde (34) begrenzt ist, in welcher in welcher wenigstens ein Anschlusselement (62) angeordnet oder anordenbar ist, über welches ein Medium, ein Signal oder elektrischer Energie wenigstens einer Komponente des Fahrzeugs zuführbar und/oder von der Komponente abführbar ist.

4. Klappeneinrichtung nach einem der vorhergehenden Ansprüche,
**gekennzeichnet durch**
ein erstes Dichtungselement (46), mittels welchem in der Schließstellung die Klappe (36) gegen das Basiselement (10) abgedichtet ist.

5. Klappeneinrichtung nach Anspruch 4,
**gekennzeichnet durch**
wenigstens ein zweites Dichtungselement (56), mittels welchem das Betätigungselement (48) gegen die Klappe (36) abgedichtet ist.

6. Klappeneinrichtung nach einem der vorhergehenden Ansprüche,
**dadurch gekennzeichnet, dass**
das Betätigungselement (48) in einen elastischen Drückbereich (64) aufweist, mit dessen Rückseite der Drück-Drück-Mechanismus (16) in Kontakt ist und mittels welchem der Drück-Drück-Mechanismus (16) betätigbar ist.

7. Klappeneinrichtung nach einem der vorhergehenden Ansprüche,
**dadurch gekennzeichnet, dass**
das Betätigungselement (48) in einer Ausnehmung (50) der Klappe (36) angeordnet ist.

8. Klappeneinrichtung nach einem der vorhergehenden Ansprüche,
**dadurch gekennzeichnet, dass**
in der Schließstellung der Klappe (36) und in dem Schließzustand des Drück-Drück-Mechanismus (16) der Drück-Drück-Mechanismus (16) direkt mit dem Betätigungselement (48) zusammenwirkt, wodurch über das Betätigungselement (48) die Klappe (36) relativ zu dem Basiselement (10) in der Schließstellung gesichert ist.

9. Klappeneinrichtung nach einem der vorhergehenden Ansprüche,
**dadurch gekennzeichnet, dass**
die Klappe (36) einen Grundkörper (38) und eine separat von dem Grundkörper (38) ausgebildete Blende (40) aufweist, mittels welcher eine zumindest in der Schließstellung von der Öffnung (34) abgewandte Vorderseite des Grundkörpers (38) zumindest überwiegend überdeckt und dadurch verkleidet ist.

10. Klappeneinrichtung nach Anspruch 9,
**dadurch gekennzeichnet, dass**
in der Schließstellung der Klappe (36) und in dem Schließzustand des Drück-Drück-Mechanismus (16) das Bewegungselement (20) eine korrespondierende Durchgangsöffnung (54) des Grundkörpers (38) zumindest teilweise durchdringt.

11. Klappeneinrichtung nach einem der vorhergehenden Ansprüche,
**gekennzeichnet durch**
eine elektrisch betreibbare Verriegelungseinrichtung, welche elektrisch zwischen einem das aus dem Ausüben der Druckkraft auf den Drück-Drück-Mechanismus (16) resultierende Überführen des Drück-Drück-Mechanismus (16) aus dem Schließzustand in den Offenzustand verhindernden und dadurch den Drück-Drück-Mechanismus (16) verriegelnden Verriegelungszustand und einem das aus dem Ausüben der Druckkraft auf den Drück-Drück-Mechanismus (16) resultierende Überführen des Drück-Drück-Mechanismus (16) aus dem Schließzustand in den Offenzustand zulassenden und dadurch den Drück-Drück-Mechanismus (16) freigebenden Freigabezustand umschaltbar ist.

12. Fahrzeug, mit wenigstens einer Klappeneinrichtung nach einem der vorhergehenden Ansprüche.

## Claims

1. A flap device for a vehicle, comprising a base element (10), by means of which at least one opening (34) is delimited, also comprising a flap (36), which is supported on the base element (10) and is movable relative to the latter between at least one closed position, which covers and thereby seals at least a subregion of the opening (34), and at least one open position which exposes the subregion, further comprising a push-push mechanism (16) which, when an alternating pressure force is exerted against the push-push mechanism (16), is transitionable from a closed condition into an open condition and from the open condition into the closed condition, in which the push-push mechanism (16) is movable from the open condition when the flap (36) is moved from the open position into the closed position, wherein, given movement of the push-push mechanism (16) from the closed condition into the open condition by means of the push-push mechanism (16), an opening movement of the flap (36) is effectable from the closed position into the open position, or in the direction of the open position, and wherein the flap device comprises an actuating element (48), which is designed to be separate from the flap (36) and supported on the flap (36) in a limitedly movable manner, thereby being pivotable along with the flap (36), via which actuating element the pressure force on the push-push mechanism (16) is exertable in an alternating manner, and the opening movement of the flap (36) is effectable by means of the push-push mechanism (16),
**characterized in that**
the push-push mechanism (16) comprises a movement element (20), which is movable in a back-and-forth manner via the alternating exertion of the pressure force on the movement element (20) in a translational manner along a movement axis relative to the base element (10) and in a rotational manner about the movement axis, between a retracted position in which the movement element (20) is located in the closed condition of the push-push mechanism (16) and an extended position in which the movement element (20) is located in the open condition of the push-push mechanism (16), wherein the rear side of the actuating element (48) comprises a cutout (60) which faces the the movement element (20) when the flap (36) is in the closed position and the push-push mechanism (16) is in the closed condition, wherein, via movement of the flap (36) and the actuating element (48) from the open position into the closed position, the movement element (20), which is initially located in the extended position, is initially movable into the cutout (60) and subsequently movable from the extended position into the retracted position, as a result of which the movement element (20) is rotatable in relation to the actuating element (48) while the movement element (20) is engaging into the cutout (60), as a result of which, when the flap (36) and the actuating element (48) are in the closed position and the movement element (20) is in the retracted position, at least one locking tab (58) of the movement element (20) engages behind a wall (66) of the actuating element (48), which wall delimits the cutout (60), as a result of which the movement element (20) directly interacts with the actuating element (48) in an interlocking manner, and the flap (36) is secured in the closed position relative to the base element (10) by means of the actuating element (48).

2. The flap device according to claim 1,
**characterized in that**,
given exertion of the pressure force on the actuating element (48), and on the push-push mechanism via the actuating element (48), the push-push mechanism (48) interacts directly with the actuating element (48).

3. The flap device according to claim 1 or 2,
**characterized in that**
the flap device is designed as a fuel inlet compartment device, the base element (10) of which is designed as a housing, by means of which the fuel inlet compartment (34) comprising the opening is delimited, in which fuel inlet compartment at least one connector element (62) is or can be arranged, via which connector element a medium, a signal, or electrical energy can be supplied to at least one component of the vehicle and/or drawn from the components.

4. The flap device according to one of the preceding claims,
**characterized by**
a first sealing element (46), by means of which the flap (36) is sealed against the base element (10) in the closed position.

5. The flap device according to claim 4,
**characterized by**
at least one second sealing element (56), by means of which the actuating element (48) is sealed against the flap (36).

6. The flap device according to one of the preceding claims,
**characterized in that**
the actuating element (48) comprises an elastic pressure region (64), the rear side of which contacts the push-push mechanism (16) and by means of which the push-push mechanism (16) is actuable.

7. The flap device according to one of the preceding claims,
**characterized in that**
the actuating element (48) is arranged in an orifice plate (50) of the flap (36).

8. The flap device according to one of the preceding claims,
**characterized in that**,
when the flap (36) is in the closed position and the push-push mechanism (16) is in the closed condition, the push-push mechanism (16) directly interacts with the actuating element (48), as a result of which the flap (36) is secured in the closed position relative to the base element (10) via the actuating element (48).

9. The flap device according to one of the preceding claims,
**characterized in that**
the flap (36) comprises a main body (38) and a orifice plate (40), which is designed to be separate from the main body (38) and by means of which, at least when the opening (34) is in the closed position, a front side of the base body (38) facing away is at least mostly covered and thereby encased.

10. The flap device according to claim 9,
**characterized in that**,
when the flap (36) is in the closed position and the push-push mechanism (16) is in the closed condition, the movement element (20) at least partially penetrates a corresponding passage opening (54) of the base body (38).

11. The flap device according to one of the preceding claims,
**characterized by**
an electrically operable locking device that is electrically switchable between a locked condition, which prevents the open condition and is a result of the transition by the push-push mechanism (16) from the closed position into the open position due to the exertion of the pressure force on the push-push mechanism (16), thereby locking the push-push mechanism (16), and an exposed condition, which allows the open condition and is a result of the transition by the push-push mechanism (16) from the closed position into the open position due to the exertion of the pressure force on the push-push mechanism (16), thereby exposing the push-push mechanism (16).

12. A vehicle comprising at least one flap device according to one of the previous claims.

## Revendications

1. Dispositif à volet pour un véhicule, comprenant un élément de base (10) qui délimite au moins une ouverture (34), comprenant un volet (36) qui est maintenu sur l'élément de base (10) de manière mobile par rapport à celui-ci entre au moins une position fermée recouvrant au moins une zone partielle de l'ouverture (34) et l'obturant ainsi, et au moins une position ouverte libérant la zone partielle, et comprenant un mécanisme push-push (16) qui, en exerçant en alternance une force de pression sur le mécanisme push-push (16), peut passer d'un état fermé à un état ouvert et de l'état ouvert à l'état fermé, dans lequel le mécanisme push-push (16) peut être déplacé de l'état ouvert à la position fermée par déplacement du volet (36) de la position ouverte, où, lors du déplacement du mécanisme push-push (16) de l'état fermé à l'état ouvert, un mouvement d'ouverture du volet (36) de la position fermée à la position ouverte ou en direction de la position ouverte peut être provoqué au moyen du mécanisme push-push (16), et où le dispositif à clapet comprend un élément d'actionnement (48) réalisé séparément du volet (36) et maintenu sur le volet (36) avec une mobilité limitée et pouvant ainsi pivoter avec le volet (36), par lequel la force de pression peut être exercée en alternance sur le mécanisme push-push (16) et le mouvement d'ouverture du volet (36) peut être provoqué au moyen du mécanisme push-push (16),
**caractérisé en ce que**
le mécanisme push-push (16) comprend un élément mobile (20) qui, en exerçant en alternance la force de pression sur l'élément mobile (20) par rapport à l'élément de base (10), se déplace en translation le long d'un axe de déplacement et en rotation autour de l'axe de déplacement entre une position rétractée dans laquelle l'élément mobile (20) se trouve dans l'état fermé du mécanisme push-push (16), et une position déployée dans laquelle l'élément mobile (20) se trouve dans l'état ouvert du mécanisme push-push (16), où l'élément d'actionnement (48) comprend un logement (60) sur sa face arrière tournée vers l'élément mobile (20) dans la position fermée du volet (36) et dans l'état fermé du mécanisme push-push (16), où, en déplaçant le volet (36) et l'élément d'actionnement (48) de la position ouverte à la position fermée, l'élément mobile (20), qui se trouve d'abord dans la position déployée, peut d'abord être déplacé dans le logement (60) et peut ensuite être déplacé de la position déployée à la position rétractée, ce qui permet à l'élément mobile (20) de tourner par rapport à l'élément d'actionnement (48), tandis que l'élément mobile (20) s'engage dans le logement (60), grâce à quoi, dans la position fermée du volet (36) et de l'élément d'actionnement (48) et dans la position rétractée de l'élément mobile (20), au moins un ergot de verrouillage (58) de l'élément mobile (20) s'engage derrière une paroi (66) de l'élément d'actionnement (20) qui délimite le logement (60), grâce à quoi l'élément mobile (20) coopère directement avec l'élément d'actionnement (48) par complémentarité de formes et le volet (36) est bloqué par rapport à l'élément de base (10) dans la position fermée par l'intermédiaire de l'élément d'actionnement (48).

2. Dispositif à volet selon la revendication 1, **caractérisé en ce que**
lorsque la force de pression est exercée sur l'élément d'actionnement (48) et par l'intermédiaire de l'élément d'actionnement (48) sur le mécanisme push-push, le mécanisme push-push (48) coopère directement avec l'élément d'actionnement (48).

3. Dispositif à volet selon la revendication 1 ou 2, **caractérisé en ce que**
le dispositif à volet est réalisé en tant que dispositif à cavité dont l'élément de base (10) est réalisé en tant que boîtier à travers lequel est délimitée une cavité (34) comprenant l'ouverture, dans laquelle au moins un élément de raccordement (62) est agencé ou peut être agencé, par l'intermédiaire duquel un fluide, un signal ou de l'énergie électrique peut être amené à au moins un composant du véhicule et/ou peut être évacué du composant.

4. Dispositif à volet selon l'une des revendications précédentes, **caractérisé par**
un premier élément d'étanchéité (46) au moyen duquel le volet (36) est scellé contre l'élément de base (10) en position fermée.

5. Dispositif à volet selon la revendication 4, **caractérisé par**
au moins un second élément d'étanchéité (56) au moyen duquel l'élément d'actionnement (48) est scellé contre le volet (36).

6. Dispositif à volet selon l'une des revendications précédentes, **caractérisé en ce que**
l'élément d'actionnement (48) comprend une zone de pression élastique (64) avec la face arrière de laquelle le mécanisme push-push (16) est en contact et au moyen de laquelle le mécanisme push-push (16) peut être actionné.

7. Dispositif à volet selon l'une des revendications précédentes, **caractérisé en ce que**
l'élément d'actionnement (48) est agencé dans un évidement (50) du volet (36).

8. Dispositif à volet selon l'une des revendications précédentes, **caractérisé en ce que**
en position fermée du volet (36) et à l'état fermé du mécanisme push-push (16), le mécanisme push-push (16) coopère directement avec l'élément d'actionnement (48), grâce à quoi, par l'intermédiaire de l'élément d'actionnement (48), le volet (36) est bloqué en position fermée par rapport à l'élément de base (10).

9. Dispositif à volet selon l'une des revendications précédentes, **caractérisé en ce que**
le volet (36) comprend un corps de base (38) et un cache (40) réalisé séparément du corps de base (38), au moyen duquel une face avant du corps de base (38), opposée à l'ouverture (34) au moins en position fermée, est masquée au moins en majeure partie et ainsi recouverte.

10. Dispositif à volet selon la revendication 9, **caractérisé en ce que**
en position fermée du volet (36) et à l'état fermé du mécanisme push-push (16), l'élément mobile (20) pénètre au moins partiellement dans une ouverture traversante (54) correspondante du corps de base (38).

11. Dispositif à volet selon l'une des revendications précédentes, **caractérisé par**
un dispositif de verrouillage à commande électrique, qui commute électriquement entre un état empêchant le passage du mécanisme push-push (16) de l'état fermé à l'état ouvert, résultant de l'exercice de la force de pression sur le mécanisme push-push (16), et qui verrouille ainsi le mécanisme push-push (16), et un état de libération permettant le passage du mécanisme push-push (16) de l'état fermé à l'état ouvert, résultant de l'exercice de la force de pression sur le mécanisme push-push (16), et libérant ainsi le mécanisme push-push (16).

12. Véhicule, avec au moins un dispositif à volet selon l'une des revendications précédentes.
